# EUROPÄISCHE PATENTSCHRIFT

(11) **EP 0 829 668 B1**
(45) Veröffentlichungstag und Bekanntmachung des Hinweises auf die Patenterteilung: **28.02.2001**
(21) Anmeldenummer: 97112113.2
(22) Anmeldetag: 16.07.1997
(51) Int. Cl.: F16K 39/02, F16K 31/06

(54) **Magnetventil**
Solenoid valve
Vanne électromagnétique

(30) Priorität: 10.08.1996 DE 19632379
(43) Veröffentlichungstag der Anmeldung: 18.03.1998
(73) Patentinhaber: FESTO AG & Co, 73734 Esslingen (DE)
(72) Erfinder: Stoll, Kurt, Dr., 73732 Esslingen (DE); Schnatterer, Jürgen, 72649 Wolfschlugen (DE)
(74) Vertreter: Abel, Martin, Dipl.-Ing.

(56) Entgegenhaltungen:
- DE-A- 3 500 802
- DE-A- 3 942 026
- DE-B- 1 031 073
- DE-B- 1 234 469
- FR-A- 1 390 295
- FR-A- 2 567 985
- GB-A- 1 579 662

## Beschreibung

Die Erfindung betrifft ein Magnetventil, mit einem mit einer Druckmittelquelle verbindbaren Einlaßkanal und einem mit einem Verbraucher verbindbaren Auslaßkanal, ferner mit einer zwischen den beiden Kanälen angeordneten Überströmöffnung, der auf der Seite des Einlaßkanals ein mittels eines Elektromagneten bewegbares Ventilglied gegenüberliegt, das in seiner bei Gebrauch eingenommenen Schließstellung an einem die Überströmöffnung umschließenden Ventilsitz anliegt und dabei in Schließrichtung beaufschlagt ist, und mit einem in Gebrauch von einem Steuerdruck beaufschlagten bewegbaren Unterstützungsglied, das durch den Auslaßkanal hindurch in Öffnungsrichtung auf das Ventilglied einwirkt, wobei das Unterstützungsglied separat von Ventilglied ausgebildet ist und in der Schließstellung an dem Ventilglied anliegt.

Ein Magnetventil dieser Art geht aus der FR-A-2 567 985 hervor. Es verfügt über einen Grundkörper mit einem vom Speisedruck beaufschlagten Einlaßkanal und einem zu einem Verbraucher führenden Auslaßkanal. An dem Grundkörper ist ein Elektromagnet angeordnet, der ein Ventilglied aufweist, das durch eine Rückstell-Federeinrichtung in eine Schließstellung vorgespannt ist, in der es an einem eine Überströmöffnung zwischen dem Einlaßkanal und dem Auslaßkanal definierenden Ventilsitz anliegt. Um ein Überströmen des fluidischen Druckmediums aus dem Einlaßkanal in den Auslaßkanal zu ermöglichen, wird das Ventilglied durch Erregung des Elektromagneten in eine Offenstellung umgeschaltet, in der es vom Ventilsitz abgehoben ist und die Überströmöffnung freigegeben wird.

Zum Umschalten in die Offenstellung bedarf es üblicherweise einer nicht unbeträchtlichen Antriebsenergie, weil das Ventilglied infolge der Druckdifferenz zwischen dem Einlaßkanal und dem Auslaßkanal zusätzlich durch den einlaßseitigen Speisedruck in die Schließstellung vorgespannt ist. Diesem Problem ist man in der FR-A-2 567 985 dadurch begegnet, daß man anliegend an dem Ventilglied ein separates kolbenartiges Unterstützungsglied vorsieht, das vom einlaßseitigen Druck ständig in Öffnungsrichtung beaufschlagt wird. Die daraus resultierende Kraft wirkt der Schließkraft entgegen und führt zu einer Reduzierung der zum Öffnen erforderlichen Magnetkraft. Allerdings erfordert dies höhere Schließkräfte, um das Ventilglied aus der Offenstellung in die Schließstellung zurückzuschalten und es ist weiterhin viel Antriebsenergie erforderlich, um schnelle Schaltvorgänge zu gewährleisten.

Es ist die Aufgabe der vorliegenden Erfindung, ein Magnetventil der eingangs genannten Art zu schaffen, das auch bei großen Strömungsquerschnitten und somit hohen Durchflußwerten bei geringem Energieverbrauch kurze Schaltzeiten ermöglicht.

Zur Lösung dieser Aufgabe ist vorgesehen, daß der maximale, in Bewegungsrichtung des Ventilgliedes gemessene Verstellweg des Unterstützungsgliedes, ausgehend von seiner Grundstellung, in der es an dem in Schließstellung befindlichen Ventilglied anliegt, geringer ist als der Schaltweg des Ventilgliedes zwischen der Schließstellung und der Offenstellung.

Auf diese Weise erfolgt weiterhin durch Fluidkraft eine Unterstützung der Öffnungsbewegung des Ventilgliedes. Das Ventilglied wird durch das von einem Steuerdruck beaufschlagte Unterstützungsglied in Öffnungsrichtung beaufschlagt, so daß es eine in Öffnungsrichtung wirksame Stellkraft erfährt, die der vom Speisedruck hervorgerufenen Schließkraft entgegenwirkt. Die das Ventilglied in die Schließstellung vorspannende resultierende Fluidkraft kann dadurch nach Bedarf reduziert werden, so daß die vom Elektromagneten für die Öffnungsbewegung aufzuwendende Antriebskraft nurmehr gering ist. Selbst wenn der Querschnitt der Überströmöffnung sehr groß ist und dementsprechend das Ventilglied mit einer hohen, vom Speisedruck hervorgerufenen Schließkraft in die Schließstellung vorgespannt wird, kann durch das entgegengesetzt wirkende Unterstützungsglied eine zumindest teilweise Kompensation der fluidbedingten Kräfte hervorgerufen werden, was bei geringem Energieverbrauch kurze Schaltzeiten bzw. schnelle Bewegungen des Ventilgliedes ermöglicht.

Ein weiterer Vorteil wird dadurch erzielt, daß das Unterstützungsglied separat vom Ventilglied ausgebildet ist, so daß das Ventilglied in bestimmten Situationen von dem Unterstützungsglied abheben kann und nicht mehr unter dessen Einwirkung steht. Dadurch ist es möglich, den maximalen Verstellweg des Stellgliedes auf einen Bruchteil des maximalen Schaltweges des Ventilgliedes zu begrenzen. Auf diese Weise erfolgt eine Unterstützung der Öffnungsbewegung des Ventilgliedes nur zu Beginn seiner Öffnungsbewegung bis die Überströmöffnung zumindest teilweise freigegeben ist und das Ventilglied auch an der dem Ventilsitz zugewandten Seite von dem unter dem Speisedruck stehenden zugeführten Druckmedium umspült werden kann. Dadurch ist die vom Speisedruck hervorgerufene Schließkraft bereits stark reduziert, und auch ein schwacher Elektromagnet ist in der Lage, das Ventilglied vollends bis zur Offenstellung zu bewegen. Der Vorteil dieser Anordnung besteht darin, daß bei der nachfolgenden Schließbewegung nicht sofort auch das Unterstützungsglied zurückgedrückt werden muß. Dieses wird vielmehr erst dann vom Ventilglied beaufschlagt, wenn das Ventilglied bereits eine gewisse kinetische Energie besitzt, so daß das Ventilglied unter gleichzeitigem Zurückstoßen des Unterstützungsgliedes sicher in die Schließstellung umschalten kann.

Aus der DE-A-39 42 026 geht ein druckausgeglichenes Magnetventil hervor, das zur Reduzierung der Öffnungskraft mit einem zusätzlichen Hilfsventil ausgestattet ist.

Vorteilhafte Weiterbildungen der Erfindung gehen aus den Unteransprüchen hervor.

Es ist von Vorteil, wenn der Steuerdruck variabel einstellbar ist. Dadurch können die am Ventilglied angreifenden resultierenden Druckkräfte entsprechend dem jeweiligen Anwendungsfall gezielt beeinflußt und vorgegeben werden.

Am zweckmäßigsten ist es, wenn der Steuerdruck dem Speisedruck entspricht. Hierbei kann das den Steuerdruck liefernde Steuerfluid aus dem Einlaßkanal abgezweigt werden, so daß sich eine separate Fluidzuführung erübrigt.

Das Unterstützungsglied verfügt zweckmäßigerweise über eine bewegliche Antriebspartie, die in einem Durchgang unter Abdichtung beweglich aufgenommen ist, der den Auslaßkanal mit einer von dem Steuerdruck beaufschlagten Steuerkammer verbindet. Die Antriebspartie kann hierbei einen beweglichen Abschnitt der den Auslaßkanal begrenzenden Wand bilden und ist einerseits vom Steuerdruck und andererseits von dem im Auslaßkanal herrschenden Auslaßdruck beaufschlagt.

Zweckmäßigerweise ist die Antriebspartie von einem verschiebbaren Kolben gebildet, an dem zweckmäßigerweise ein zum Ventilglied ragender Betätigungsstößel angeordnet ist, der im Vergleich zum Auslaßkanal einen erheblich geringeren Querschnitt hat, so daß er den Strömungsquerschnitt des Auslaßkanals nur wenig reduziert. Das Unterstützungsglied wirkt vorzugsweise durch die Überströmöffnung hindurch auf den in der Schließstellung die Überströmöffnung abdeckenden stirnseitigen Bereich des Ventilgliedes ein.

Der Schließvorgang kann dadurch noch beschleunigt werden, daß eine das Ventilglied zu Beginn der Schließbewegung antreibende Beschleunigungs-Federeinrichtung vorgesehen ist, die allerdings erst während des letzten Abschnittes der Öffnungsbewegung des Ventilgliedes gespannt wird. Sie wirkt also nur während der anfänglichen Bewegungsphase der Öffnungsbewegung, um dem Ventilglied einen starken Beschleunigungsimpuls zu verleihen.

Nachfolgend wird die Erfindung anhand der beiliegenden Zeichnung näher erläutert. In dieser zeigen:
- Fig. 1: eine erste Bauform des erfindungsgemäßen Magnetventils in 2/2-Wege-Ausführung im Längsschnitt, wobei das Ventilglied die Schließstellung einnimmt,
- Fig. 2: das Magnetventil aus Fig. 1 bei in die Offenstellung verlagertem Ventilglied und
- Fig. 3: eine im Vergleich zur Ausführungsform gemäß Fig. 1 und 2 modifizierte Bauform des Magnetventils, wiederum im Längsschnitt.

Die in der Zeichnung abgebildeten Magnetventile 1 verfügen jeweils über einen Grundkörper 2, an dem ein Elektromagnet 3 insbesondere lösbar festgelegt ist. Der lediglich schematisch angedeutete Elektromagnet 3 verfügt über mindestens eine Spule 4, die mit Anschlußmitteln 5 verbunden ist, über die die für den Betrieb des Elektromagneten 3 erforderliche elektrische Energie zugeführt wird. Innerhalb der Spule 4 ist ein feststehender Anker 6 angeordnet, in dessen axialer Verlängerung auf der dem Grundkörper 2 zugewandten Seite ein in Längsrichtung beweglicher Anker 7 angeordnet ist. Der bewegliche Anker 7 taucht mit einer Teillänge in eine sich an den feststehenden Anker 6 anschließende und von der Spule 4 umschlossene Ankeraufnahme 8 ein.

In dem Grundkörper 2 sind ein Einlaßkanal 12 und ein Auslaßkanal 13 ausgebildet. Jeder dieser Kanäle 12, 13 mündet mit einer Anschlußöffnung 14 an der Außenseite des Grundkörpers 2 aus. Der Einlaßkanal 12 ist über die zugeordnete Anschlußöffnung 14 mit einer Druckmittelquelle P verbindbar, die unter Druck stehendes fluidisches Druckmedium liefert, insbesondere Druckluft. Der Auslaßkanal 13 ist über seine Anschlußöffnung 14 mit einem durch Fluidkraft zu betätigenden Verbraucher V verbindbar, beispielsweise einem Arbeitszylinder.

Der Einlaßkanal 12 und der Auslaßkanal 13 stehen im Innern des Grundkörpers 2 über eine verschließbare Überströmöffnung 15 in Verbindung. Diese ist auf der dem Einlaßkanal 12 zugewandten Seite von einem ringförmigen, in sich geschlossenen Ventilsitz 19 umgeben, der vorzugsweise Bestandteil des Grundkörpers 2 ist.

Die Überströmöffnung 15 mündet in eine Zuströmkammer 16, die von einer Erweiterung des Einlaßkanals 12 gebildet ist. In diese Zuströmkammer 16 ragt ein Ventilglied 17 hinein, das beispielsgemäß von dem beweglichen Anker 7 gebildet ist. Bei entferntem Elektromagneten 3 ist die Zuströmkammer 16 zu einer außen am Grundkörper 2 befindlichen Montagefläche 18 hin offen, wobei der Elektromagnet 3 an diese Montagefläche 18 angesetzt ist, so daß der aus der Ankeraufnahme 8 herausragende Endabschnitt 22 des beweglichen Ankers 7 bzw. des Ventilgliedes 17 in die Zuströmkammer 16 hineinragt. Der Elektromagnet 3 bildet hierbei gleichzeitig einen Verschlußdeckel für die Zuströmkammer 16.

Die Zuströmkammer 16 hat vorzugsweise einen kreisförmigen Querschnitt, wobei die Überströmöffnung 15 insbesondere zentral in dem dem Elektromagneten entgegengesetzten Boden 23 der Zuströmkammer 16 ausgebildet ist. Dieser weist auch den Ventilsitz 19 auf.

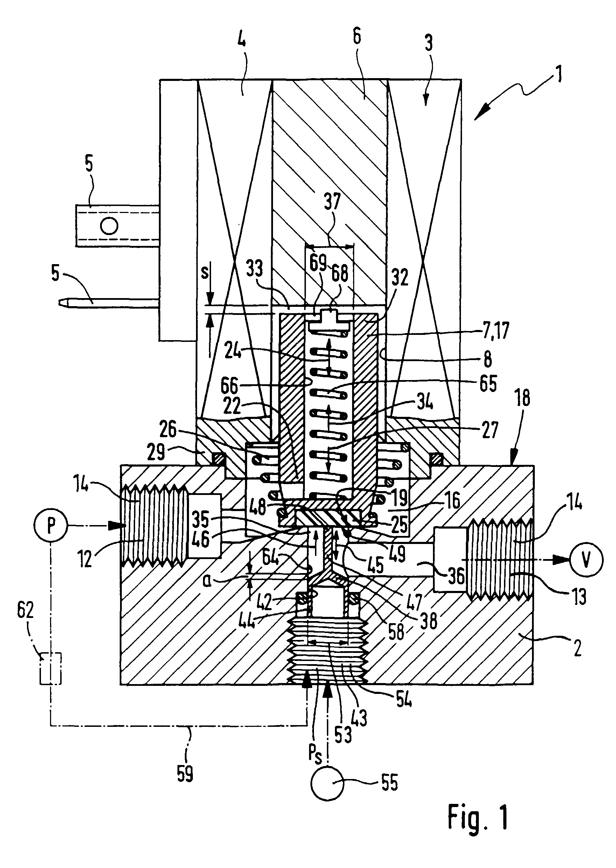

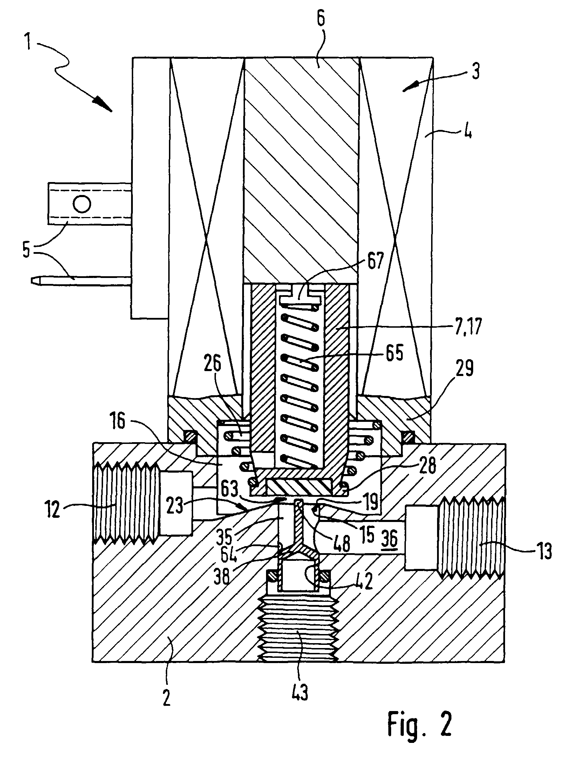

Das Ventilglied 17 kann in einer durch Doppelpfeil 24 angedeuteten linearen Bewegungsrichtung zwischen einer aus Fig. 1 hervorgehenden Schließstellung und einer aus Fig. 2 hervorgehenden Offenstellung umgeschaltet werden. Bei der Schaltbewegung des Ventilgliedes 17 handelt es sich vorzugsweise um eine lineare Hubbewegung, wobei das Ventilglied 17 zweckmäßigerweise eine im wesentlichen zylindrische Gestalt hat und die Bewegungsrichtung 24 mit seiner Längsachse zusammenfällt.

Das Ventilglied 17 liegt der überströmöffnung 15 und dem Ventilsitz 19 auf der Seite des Einlaßkanals 12 gegenüber. In der Schließstellung sitzt das Ventilglied 17 mit einer an der Stirnseite des herausragenden Endabschnittes 22 vorgesehenen Verschlußpartie 25 dicht auf dem Ventilsitz 19 auf. Das beispielsgemäße Magnetventil 1 ist somit ein Sitzventil. Bei der Verschlußpartie 25 handelt es sich vorzugsweise um ein aus Dichtmaterial, insbesondere aus gummielastischem Material, bestehendes Element, das am Ventilglied 17 festgelegt ist.

Eine Rückstell-Federeinrichtung 26 spannt das Ventilglied 17 ständig in Schließrichtung 27 vor. Sie stützt sich beispielsgemäß zwischen einem Vorsprung 28 des Ventilgliedes 17 und einem Gehäuseteil 29 des Elektromagneten 3 ab. Dabei umschließt sie das Ventilglied 17 koaxial. In der Schließstellung liegt zwischen dem rückseitigen Endabschnitt 32 des Ventilgliedes 17 und dem feststehenden Anker 6 ein Zwischenraum 33 vor.

In der Schließstellung ist die überströmöffnung 15 verschlossen, so daß kein Druckmedium vom Einlaßkanal 12 in den Auslaßkanal 13 überströmen kann.

Durch Erregung der Spule 4 des Elektromagneten 3 ist das Ventilglied 17 in die aus Fig. 2 hervorgehende Offenstellung umschaltbar. Das Ventilglied 17 wird vom Magnetfeld angezogen und in Öffnungsrichtung 34 verlagert, bis es an dem feststehenden Anker 6 zur Anlage gelangt. Der Zwischenraum 33 ist in der Offenstellung geschlossen. Die in Bewegungsrichtung 24 gemessene Breite des Zwischenraumes 33 definiert somit den Schaltweg s des Ventilgliedes 17 zwischen der Schließstellung und der Offenstellung.

Beim Verlagern des Ventilgliedes 17 in die Offenstellung wird die Rückstell-Federeinrichtung 26 komprimiert. Sie trägt dazu bei, daß das Ventilglied 17 bei entregter Spule 4 in die die Ausgangsstellung darstellende Schließstellung gemäß Fig. 1 zurückgestellt wird.

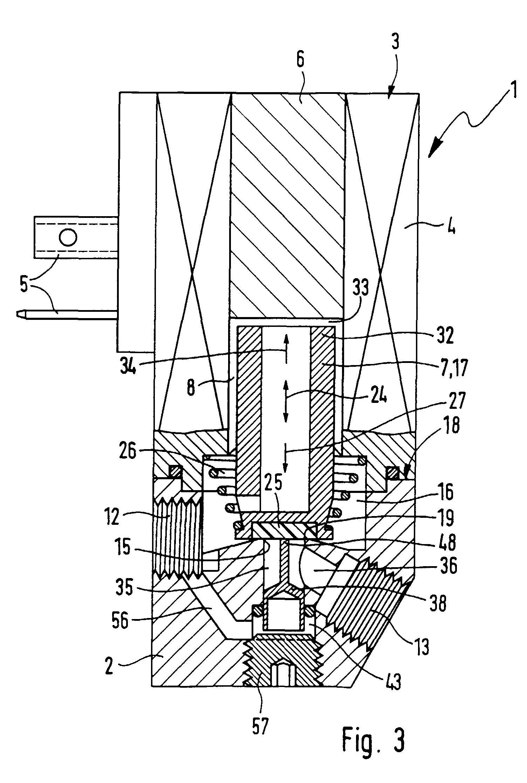

Auslaßseitig schließt sich an die überströmöffnung 15 zunächst ein erster Kanalabschnitt 35 des Auslaßkanals 13 an, der koaxial zur überströmöffnung 15 und zum Ventilglied 17 verläuft. Er erstreckt sich mithin in Bewegungsrichtung 24 des Ventilgliedes 17. An diesen ersten Kanalabschnitt 35 schließt sich ein zweiter Kanalabschnitt 36 des Auslaßkanals 13 an, der sich seitwärts erstreckt, so daß der Verlauf des Auslaßkanals 13 einen Knick aufweist. Beim Ausführungsbeispiel gemäß Fig. 1 und 2 verläuft der zweite Kanalabschnitt rechtwinkelig zu dem ersten Kanalabschnitt 35, so daß das durch den Auslaßkanal 13 ausströmende Druckmedium eine relativ scharfe Umlenkung erfährt. Im Vergleich dazu ist bei der Ausführungsform der Fig. 3 ein strömungsgünstigerer Verlauf des Auslaßkanals 13 vorgesehen, indem der zweite Kanalabschnitt 36 bezogen auf den ersten Kanalabschnitt 35 unter einem stumpfen Winkel schräg abgeht.

Im übrigen sei darauf hingewiesen, daß die vorliegende Beschreibung, sofern im einzelnen nichts anderes ausgeführt wird, auch für die Fig. 3 gilt, bei der übereinstimmende Bauteile mit identischen Bezugszeichen versehen sind. Die Fig. 3 zeigt eine Ausgestaltung des Magnetventils, bei der sich das Ventilglied 17 vergleichbar der Fig. 1 in der Schließstellung befindet.

Das Ventilglied 17 ist in der Schließstellung vom einlaßseitigen Speisedruck, also von dem im Einlaßkanal 12 herrschenden Druck, in Schließrichtung 27 beaufschlagt. Für die sich ergebende, in Schließrichtung 27 wirksame Schließkraft ist allerdings nur ein in Öffnungsrichtung 34 weisender wirksamer Flächenabschnitt 37 relevant, dessen Fläche der Querschnittsfläche der Überströmöffnung 15 entspricht. Im übrigen ist das Ventilglied 17 druckausgeglichen. Die resultierende Schließkraft resultiert aus der Druckdifferenz bezogen auf die erwähnten Flächen.

Besonders wenn große Überströmquerschnitte gewünscht sind und/oder wenn einlaßseitig ein hoher Druck ansteht, bedarf es somit einer hohen Magnetkraft, um das Ventilglied 17 in die Offenstellung umzuschalten. Um dieses Problem zu umgehen, ist bei dem beschriebenen Magnetventil 1 zusätzlich zu dem Ventilglied 17 ein von einem Steuerdruck p_{S} beaufschlagtes bewegbares Unterstützungsglied 38 vorgesehen, das durch den Auslaßkanal 13 hindurch in Öffnungsrichtung 34 auf das Ventilglied 17 einwirken kann. Das Unterstützungsglied 38 übt somit eine in Öffnungsrichtung 34 wirkende Kraft auf das Ventilglied 17 aus und unterstützt dadurch die Tätigkeit des Elektromagneten. Die Unterstützungskraft des Unterstützungsgliedes 38 wirkt der Schließkraft des Speisedruckes entgegen, so daß die auf das Druckmedium zurückzuführende resultierende Schließkraft minimiert werden kann und der Elektromagnet nurmehr einer geringen Leistung bedarf, um das Ventilglied 17 sehr schnell in die Offenstellung zu schalten. Somit liegt ein Schnellschaltventil vor, das auch bei großen Strömungsquerschnitten und damit verbundenen hohen Durchflußwerten extrem kurze Schaltzeiten bei geringer Betätigungsenergie ermöglicht.

Im einzelnen ist bei den Ausführungsbeispielen die Anordnung so getroffen, daß in Verlängerung des ersten Kanalabschnittes 35 des Auslaßkanals 13 ein Durchgang 42 vorgesehen ist, der den Auslaßkanal 13 mit einer Steuerkammer 43 verbindet, die mit dem Steuerdruck pₛ beaufschlagbar ist. Das Unterstützungsglied 38 verfügt über eine Antriebspartie 44, beispielsweise eine Membran oder wie abgebildet einen Kolben, die in dem Durchgang 42 in einer durch Doppelpfeil angedeuteten Verstellrichtung 45 verlagerbar unter Abdichtung angeordnet ist. Die Antriebspartie 44 ist somit von der Seite des Auslaßkanals 13 her von dem darin herrschenden Druck und in entgegengesetzter Richtung von dem in der Steuerkammer 43 herrschenden Steuerdruck pₛ beaufschlagt. Da der Steuerdruck pₛ zumindest in der Schließstellung des Ventilgliedes 17 erheblich größer ist als der Druck im Auslaßkanal 13, ergibt sich eine Unterstützungskraft 46, mit der das Unterstüzungsglied 38 in Richtung des Ventilgliedes 13 gedrückt wird.

An der dem Auslaßkanal 13 zugewandten Seite der Antriebspartie 44 weist das Unterstützungsglied 38 einen Betätigungsstößel 47 auf, der in Längsrichtung des ersten Kanalabschnittes 35 zur überströmöffnung 15 ragt und beim Ausführungsbeispiel gemäß Fig. 1 mit seinem freien Ende 48 an der die Überströmöffnung 15 abdeckenden Partie 49 des Ventilgliedes 17 anliegt. Hierbei ist ein loser Kontakt vorgesehen, also ein reiner Berührkontakt.

Im Falle der Ausführungsbeispiele ist vorgesehen, daß der in der Steuerkammer 43 herrschende Steuerdruck pₛ dem einlaßseitigen Speisedruck entspricht. In Verbindung mit der beispielsgemäß ebenfalls getroffenen Maßnahme, wonach die von dem Steuerdruck pₛ beaufschlagte, der Steuerkammer 43 zugewandte Steuerfläche 53 zumindest in etwa der Querschnittsfläche der Überströmöffnung 17 entspricht, hat dies zur Folge, daß die durch den Speisedruck auf das Ventilglied 17 ausgeübte Schließkraft praktisch vollständig aufgehoben ist. Die zur Betätigung des Magnetventils erforderliche Antriebsenergie hat sich dadurch nurmehr im wesentlichen an der Stellkraft der Rückstellfedereinrichtung 26 zu orientieren, die allerdings verhältnismäßig schwach ausgelegt werden kann. Es genügt in der Regel, die Erschütterungsfestigkeit des Magnetventils zu gewährleisten.

Beim Ausführungsbeispiel der Fig. 1 und 2 wird der Steuerdruck pₛ der Steuerkammer 43 separat zugeführt. Daher verfügt die Steuerkammer 43 über eine Anschlußöffnung 54, über die eine Verbindung zu einer den Steuerdruck pₛ liefernden weiteren Druckmittelquelle 55 herstellbar ist. Diese ermöglicht vorzugsweise auch eine variable Einstellung des Steuerdruckes pₛ, um auf die Unterstützungskraft Einfluß zu nehmen und die gewünschte resultierende Schließkraft des Ventilgliedes 17 nach Bedarf variabel vorgeben zu können.

Alternativ zu einer weiteren Druckmittelquelle 55 kann die Steuerkammer 43 zur Reduzierung des baulichen Aufwandes auch an die den Speisedruck liefernde Druckmittelquelle P angeschlossen werden. Eine entsprechende Ausgestaltung geht aus Fig. 3 hervor, wo das den Steuerdruck liefernde Steuerfluid aus dem Einlaßkanal 12 abgezweigt wird. Hier ist im Innern des Grundkörpers 2 ein Steuerkanal 56 ausgebildet, der den Einlaßkanal 12 mit der Steuerkammer 43 verbindet. Bei 57 ist in Fig. 3 noch ein Verschlußstopfen gezeigt, der die Steuerkammer 43 dicht verschließt und die Montage des Unterstützungsgliedes 38 sowie einer zur Abdichtung zwischen dem Grundkörper 2 und dem Unterstütungsglied 38 dienenden Dichtungseinrichtung 58 ermöglicht.

Letztere ist ringförmig ausgebildet und läßt sich beim Ausführungsbeispiel gemäß Fig. 1 und 2 über die Anschlußöffnung 54 montieren.

Anstelle eines in den Grundkörper 2 integrierten Steuerkanales 56 kann auch eine in Fig. 1 strichpunktiert angedeutete externe Druckmittelleitung 59 vorgesehen sein, um die Steuerkammer 43 mit der gemeinsamen Druckmittelquelle P zu verbinden. Sowohl in die Druckmittelleitung 59 als auch in den Steuerkanal 56 kann eine lediglich in Fig. 1 angedeutete Druckeinstelleinrichtung 62 eingeschaltet sein, die eine bedarfsgemäße Vorgabe des Steuerdruckes pₛ gestattet.

Bevorzugt steht der Steuerdruck pₛ ständig in der Steuerkammer 43 an. Dadurch steht die Unterstützungskraft 46 beim Öffnen des Magnetventils 1 verzögerungsfrei zur Verfügung. Während sich das Ventilglied 17 beim Öffnungsvorgang in Öffnungsrichtung 34 bewegt, wird es von dem Unterstützungsglied 38 zusätzlich geschoben. Dadurch taucht das Unterstützungsglied 38 durch die Überströmöffnung 15 hindurch ein Stück weit in die Zuströmkammer 16 hinein. Die Anordnung ist allerdings so getroffen, daß der Auslaßkanal 13 von dem Unterstützungsglied 38 nicht versperrt wird, indem insbesondere die Antriebspartie 44 so ausgebildet ist, daß sie bei geöffnetem Ventilglied 17 nicht oder nur unwesentlich aus dem Durchgang 42 in den Auslaßkanal 13 hineinragt. Der beispielsgemäß zentral angeordnete Betätigungsstößel 47 ist im Verhältnis zum Strömungsquerschnitt des Auslaßkanals 13 sehr dünn ausgebildet.

In der Schließstellung des Ventilgliedes 17 nimmt das Unterstützungsglied 38 die aus Fig. 1 und 3 hervorgehende Grundstellung ein. Dabei sind Maßnahmen getroffen, auf Grund derer der ausgehend von der Grundstellung gemessene maximale Verstellweg a des Unterstützungsgliedes 38 geringer ist als der Schaltweg s des Ventilgliedes 17. Dies hat zur Folge, daß das Unterstützungsglied 38 nur zu Beginn der Öffnungsbewegung des Ventilgliedes 17 auf dieses einwirkt. Den restlichen Hubweg bis zum Erreichen der Offenstellung führt das Ventilglied 17 alleine und ohne Beaufschlagung durch das Unterstützungsglied 38 aus. Dadurch verbleibt in der Offenstellung des Ventilgliedes 17 zwischen diesem und dem zugeordneten freien Ende 48 des Unterstützungsgliedes 38 ein Zwischenraum 63.

Die somit in der Offenstellung vorliegende Entkopplung zwischen dem Ventilglied und dem Unterstützungsglied 38 hat zur Folge, daß bei der anschließenden Schließbewegung das Ventilglied 17 zunächst unbeeinflußt vom Unterstützungsglied 38 in Schließrichtung 27 bewegbar ist. Erst wenn nach kurzer Wegstrecke der Zwischenraum 63 geschlossen ist, wirkt das Ventilglied 17 auf das Unterstützungsglied 38 ein und drückt dieses entgegen dem Steuerdruck pₛ in die Grundstellung zurück. Das Zurückdrücken wird dadurch erleichtert, daß das Ventilglied bis zum Auftreffen auf dem Unterstützungsglied 38 kinetische Energie erhält, so daß das Unterstützungsglied 38 mit Schwung in die Grundstellung zurückgestellt wird.

Erreicht wird bei den Ausführungsbeispielen die im Vergleich zum Ventilglied geringere Verstellstrecke des Unterstützungsgliedes 38, indem im Verstellweg des Unterstützungsgliedes 38 und insbesondere der Antriebspartie 44 mindestens ein Anschlag 64 vorgesehen ist (in Figur 3 nicht dargestellt). Dieser Anschlag 64 ragt beispielsweise in den Durchgang 42 und/oder in den ersten Kanalabschnitt 35 hinein.

Um nicht nur einen raschen Öffnungsvorgang, sondern auch einen raschen Schließvorgang zu erzielen, kann eine das Ventilglied 17 zu Beginn der Schließbewegung antreibende Beschleunigungs-Federeinrichtung 65 vorgesehen sein, die erst während des letzten Abschnittes der Öffnungsbewegung des Ventilgliedes 17 gespannt wird. Derartiges ist beim Ausführungsbeispiel gemäß Fig. 1 und 2 verwirklicht.

Das Ventilglied 17 verfügt gemäß Fig. 1 und 2 über eine Aufnahme 66, die zur Stirnfläche des rückseitigen- Endabschnittes 32 offen ist. In dieser Aufnahme 66 ist die beispielsgemäß von einer Schraubendruckfeder gebildete Beschleunigungs-Federeinrichtung 65 angeordnet, die ein Stützglied 67 beaufschlagt, so daß dieses mit einer Stützpartie 68 über die endseitige Stirnfläche des Ventilgliedes 17 hinausragt. Ein Anschlag 69 legt diese Position des Stützgliedes 67 fest. Bei Annäherung an die Offenstellung gelangt die Stützpartie 68 in Kontakt mit der zugewandten Stirnfläche des feststehenden Ankers 6 und wird unter gleichzeitiger Komprimierung der Beschleunigungs-Federeinrichtung 65 in die Aufnahme 66 zurückgedrückt, bis das Ventilglied 17 insgesamt am feststehenden Anker 6 anliegt.

Wird anschließend die Spule 4 entregt oder umgepolt, expandiert die Beschleunigungs-Federeinrichtung 65 schlagartig, wobei das Ventilglied 17 in Schließrichtung vom feststehenden Anker 6 abgestoßen wird. Die dadurch erhaltene kinetische Energie unterstützt auch das Zurückschieben des Unterstützungsgliedes 38 in die Grundstellung.

Bei dem beispielsgemäßen Magnetventil 1 handelt es sich um ein 2/2-Wegeventil. Es wäre allerdings denkbar, das erfindungsgemäße Prinzip auch auf andere Ventiltypen zu übertragen.

## Patentansprüche

1. Magnetventil, mit einem mit einer Druckmittelquelle verbindbaren Einlaßkanal (12) und einem mit einem Verbraucher verbindbaren Auslaßkanal (13), ferner mit einer zwischen den beiden Kanälen angeordneten Überströmöffnung (15), der auf der Seite des Einlaßkanals (12) ein mittels eines Elektromagneten (3) bewegbares Ventilglied (17) gegenüberliegt, das in seiner bei Gebrauch eingenommenen Schließstellung an einem die Überströmöffnung (15) umschließenden Ventilsitz (19) anliegt und dabei in Schließrichtung (27) beaufschlagt ist, und mit einem in Gebrauch von einem Steuerdruck beaufschlagten bewegbaren Unterstützungsglied (38), das durch den Auslaßkanal (13) hindurch in Öffnungsrichtung (34) auf das Ventilglied (17) einwirkt, wobei das Unterstützungsglied (38) separat vom Ventilglied (17) ausgebildet ist und an dem Ventilglied (17) in der Schließstellung anliegt, dadurch gekennzeichnet, daß der maximale, in Bewegungsrichtung (24) des Ventilgliedes (17) gemessene Verstellweg (a) des Unterstützungsgliedes (38), ausgehend von seiner Grundstellung, in der es an dem in Schließstellung befindlichen Ventilglied (17) anliegt, geringer ist als der Schaltweg (s) des Ventilgliedes (17) zwischen der Schließstellung und der Offenstellung.

2. Magnetventil nach Anspruch 1, dadurch gekennzeichnet, daß der Steuerdruck variabel einstellbar ist.

3. Magnetventil nach Anspruch 1 oder 2, dadurch gekennzeichnet, daß der Steuerdruck dem Speisedruck entspricht.

4. Magnetventil nach einem der Ansprüche 1 bis 3, dadurch gekennzeichnet, daß das den Steuerdruck liefernde Steuerfluid aus dem Einlaßkanal (12) abgezweigt ist.

5. Magnetventil nach einem der Ansprüche 1 bis 4, dadurch gekennzeichnet, daß die in Gebrauch von dem Steuerdruck beaufschlagte Steuerfläche (53) des Unterstützungsgliedes (38) zumindest in etwa der Querschnittsfläche der Überströmöffnung (15) entspricht.

6. Magnetventil nach einem der Ansprüche 1 bis 5, dadurch gekennzeichnet, daß das Unterstützungsglied (38) eine Antriebspartie (44) aufweist, die abgedichtet und bewegbar in einem den Auslaßkanal (12) mit einer vom Steuerdruck beaufschlagten Steuerkammer (43) verbindenden Durchgang (42) angeordnet ist.

7. Magnetventil nach Anspruch 6, dadurch gekennzeichnet, daß die Antriebspartie (44) von einem in dem Durchgang (42) verschiebbar angeordneten Kolben gebildet ist.

8. Magnetventil nach Anspruch 6 oder 7, dadurch gekennzeichnet, daß an der Antriebspartie (44) ein zum Ventilglied (17) ragender und mit dem Ventilglied (17) zusammenarbeitender Betätigunsstößel (47) angeordnet ist.

9. Magnetventil nach einem der Ansprüche 6 bis 8, dadurch gekennzeichnet, daß in einem Grundkörper (2) ein die Steuerkammer (43) mit dem Einlaßkanal (12) verbindender Steuerkanal (56) vorgesehen ist.

10. Magnetventil nach einem der Ansprüche 1 bis 9, dadurch gekennzeichnet, daß das Unterstützungsglied (38) durch die Überströmöffnung (15) hindurch auf die in der Schließstellung die Überströmöffnung (15) abdeckende Partie (49) des Ventilgliedes (17) einwirkt.

11. Magnetventil nach einem der Ansprüche 1 bis 10, dadurch gekennzeichnet, daß der Verstellweg (a) des Unterstützungsgliedes (38) durch mindestens einen Anschlag (69) begrenzt ist.

12. Magnetventil nach einem der Ansprüche 1 bis 11, dadurch gekennzeichnet, daß eine das Ventilglied (17) ständig in Schließrichtung (27) beaufschlagende Rückstell-Federeinrichtung (26) vorhanden ist.

13. Magnetventil nach einem der Ansprüche 1 bis 12, dadurch gekennzeichnet, daß eine das Ventilglied (17) zu Beginn der Schließbewegung antreibende Beschleunigungs-Federeinrichtung (65) vorgesehen ist, die erst während der Endphase der Öffnungsbewegung des Ventilgliedes (17) gespannt wird.

14. Magnetventil nach einem der Ansprüche 1 bis 13, dadurch gekennzeichnet, daß der Auslaßkanal (13) im Anschluß an die Überströmöffnung (15) einen sich in Bewegungsrichtung (24) des Ventilgliedes (17) erstreckenden ersten Kanalabschnitt (35) aufweist, der in einen seitlich abgehenden zweiten Kanalabschnitt (36) übergeht, wobei das Unterstützungsglied (38) in dem ersten Kanalabschnitt (35) verläuft und in einem der Überströmöffnung (15) gegenüberliegenden Durchgang (42) bewegbar angeordnet ist.

15. Magnetventil nach einem der Ansprüche 1 bis 14, dadurch gekennzeichnet, daß es sich um ein 2/2-Wegeventil handelt.

16. Magnetventil nach einem der Ansprüche 1 bis 15, dadurch gekennzeichnet, daß das Ventilglied (17) vom beweglichen Anker (7) des Elektromagneten (3) gebildet ist.

## Claims

1. Solenoid valve with an inlet duct (12) connectable to a pressure fluid source and an outlet duct (13) connectable to an actuator, further with an overflow opening (15) faced on the side of the inlet duct (12) by a valve member (17) movable by means of a solenoid (3) and lying in its closed position as adopted in use against a valve seat (19) enclosing the overflow opening (15) while being pressurised in the direction of closing (27), and with a movable support member (38) pressurised by control pressure in use and acting on the valve member (17) in the direction of opening (34) through the outlet duct (13), the support member (38) being designed separate from the valve member (17) and lying against the valve member (17) in the closed position, characterised in that the maximum stroke (a) of the support member (38) as measured in the direction of movement (24) of the valve member (17) starting from its normal position, in which it lies against the closed valve member (17), is shorter than the spool stroke (s) of the valve member (17) between its closed and open positions.

2. Solenoid valve according to claim 1, characterised in that the control pressure is variable and adjustable.

3. Solenoid valve according to claim 1 or 2, characterised in that the control pressure corresponds to the supply pressure.

4. Solenoid valve according to any of claims 1 to 3, characterised in that the control fluid supplying the control pressure is tapped off the inlet duct (12).

5. Solenoid valve according to any of claims 1 to 4, characterised in that the control surface (53) of the support member (38), to which control pressure is applied in use, at least approximately corresponds to the cross-sectional area of the overflow opening (15).

6. Solenoid valve according to any of claims 1 to 5, characterised in that the support member (38) has a drive section (44), which is sealed and movably located in a passage (42) connecting the outlet duct (12) to a control chamber (43) to which control pressure is applied.

7. Solenoid valve according to claim 6, characterised in that the drive section (44) is represented by a piston movably located in the passage (42).

8. Solenoid valve according to claim 6 or 7, characterised in that an operating plunger (47) projecting towards the valve member (17) and acting in conjunction with the valve member (17) is fitted to the drive section (44).

9. Solenoid valve according to any of claims 6 to 8, characterised in that a control duct (56) connecting the control chamber (43) to the inlet duct (12) is provided in a base body (2).

10. Solenoid valve according to any of claims 1 to 9, characterised in that the support member (38) acts through the overflow opening (15) on that part (49) of the valve member (17) which covers the overflow opening (15) in the closed position.

11. Solenoid valve according to any of claims 1 to 10, characterised in that the stroke (a) of the support member (38) is limited by at least one stop (69).

12. Solenoid valve according to any of claims 1 to 11, characterised in that a return spring device (26) continuously acting on the valve member (17) in the direction of closing (27) is provided.

13. Solenoid valve according to any of claims 1 to 12, characterised in that an acceleration spring device (65) driving the valve member (17) at the beginning of the closing movement is provided, the spring only being tensioned during the final phase of the opening movement of the valve member (17).

14. Solenoid valve according to any of claims 1 to 13, characterised in that the outlet duct (13) has, next to the overflow opening (15), a first duct section (35) extending in the direction of movement (24) of the valve member (17) and merging into a second duct section (36) branching off laterally, the support member (38) extending in the first duct section (35) and being movably located in a passage (42) arranged opposite the overflow opening (15).

15. Solenoid valve according to any of claims 1 to 14, characterised in that the valve is a 2/2-way valve.

16. Solenoid valve according to any of claims 1 to 15, characterised in that the valve member (17) is represented by the movable armature (7) of the solenoid (3).

## Revendications

1. Electrovanne, comportant un canal d'entrée (12) pouvant être relié à une source de fluide sous pression, ainsi qu'un canal de sortie (13) pouvant être relié à un récepteur, comportant en outre un orifice de trop-plein (15) qui est disposé entre les deux canaux et auquel fait face, sur le côté du canal d'entrée (12), un obturateur de vanne (17) déplaçable au moyen d'un électro-aimant (3), qui dans sa position de fermeture, prise en cours d'utilisation, s'applique contre un siège de vanne (19) entourant l'orifice de trop-plein (15), et est ainsi sollicité dans le sens de fermeture (27), et comportant un organe de soutien (38) déplaçable, soumis pendant l'utilisation à une pression de commande et qui agit sur l'obturateur de vanne (17), dans le sens de l'ouverture (34), à travers le canal de sortie (13), I' obturateur de soutien (38) étant réalisé séparément de l'obturateur de vanne (17) et s'appliquant contre l'obturateur de vanne (17), en position de fermeture, caractérisée en ce que la distance de déplacement maximale (a) de l'organe de soutien (38), mesurée dans le sens de déplacement (24) de l'obturateur (17), partant de sa position de base dans laquelle il s'applique contre l'obturateur de vanne (17) se trouvant en position de fermeture, est inférieure à la distance de commutation (s) de l'obturateur de vanne (17), entre la position de fermeture et la position d'ouverture.

2. Electrovanne selon la revendication 1, caractérisée en ce que la pression de commande peut être réglée de manière variable.

3. Electrovanne selon la revendication 1 ou 2, caractérisée en ce que la pression de commande correspond à la pression d'alimentation.

4. Electrovanne selon l'une des revendications 1 à 3, caractérisée en ce que le fluide de commande, qui fournit la pression de commande, est dérivé du canal d'entrée (12).

5. Electrovanne selon l'une des revendications 1 à 4, caractérisée en ce que la surface de commande (53) de l'organe de soutien (38), qui est soumise à la pression de commande pendant l'utilisation, correspond au moins sensiblement à la surface de la section de l'orifice de trop-plein (15).

6. Electrovanne selon l'une des revendications 1 à 5, caractérisée en ce que l'organe de soutien (38) présente une partie d'entraînement (44) qui est disposée de manière étanche et de manière à pouvoir se déplacer dans un passage (42) qui relie le canal de sortie (12) à une chambre de commande (43), soumise à la pression de commande.

7. Electrovanne selon la revendication 6, caractérisée en ce que la partie d'entraînement (44) est formée par un piston disposé coulissant dans le passage (42).

8. Electrovanne selon la revendication 6 ou 7, caractérisée en ce qu'un poussoir d'actionnement (47) qui est dirigé vers l'obturateur de vanne (17), et qui coopère avec ce dernier, est disposé sur la partie d'entraînement (44).

9. Electrovanne selon l'une des revendications 6 à 8, caractérisée en ce qu'un canal de commande (56), qui relie la chambre de commande (43) au canal d'entrée (12), est prévu dans un corps de base (2).

10. Electrovanne selon l'une des revendications 1 à 9, caractérisée en ce que l'organe de soutien (38) agit, à travers l'orifice de trop-plein (15), sur la partie (49) de l'obturateur de vanne (17), qui en position de fermeture recouvre l'orifice de trop-plein (15).

11. Electrovanne selon l'une des revendications 1 à 10, caractérisée en ce que la distance de déplacement (a) de l'organe de soutien (38) est limitée par au moins une butée (69).

12. Electrovanne selon l'une des revendications 1 à 11, caractérisée en ce qu'il est prévu un dispositif à ressort de rappel (26) qui sollicite en permanence l'obturateur de vanne (17) dans son sens de fermeture (27).

13. Electrovanne selon l'une des revendications 1 à 12, caractérisée en ce qu'il est prévu un dispositif à ressort d'accélération (65), qui entraîne l'obturateur de vanne (17) au début du mouvement de fermeture et qui n'est tendu que pendant la phase terminale du mouvement d'ouverture de l'obturateur de vanne (17).

14. Electrovanne selon l'une des revendications 1 à 13, caractérisée en ce que le canal de sortie (13) présente, à la suite de l'orifice de trop-plein (15), un premier tronçon (35) qui s'étend dans le sens de déplacement (24) de l'obturateur de vanne (17) et qui se prolonge par un deuxième tronçon (36), partant latéralement, l'organe de soutien (38) s'étendant dans le premier tronçon (35) du canal et étant disposé de manière à pouvoir se déplacer dans un passage (42) qui fait face à l'orifice de trop-plein (15).

15. Electrovanne selon l'une des revendications 1 à 14, caractérisée en ce qu'il s'agit d'une vanne de distribution à 2/2 voies.

16. Electrovanne selon l'une des revendications 1 à 15, caractérisée en ce que l'obturateur de vanne (17) est formé par le noyau mobile (7) de l'électro-aimant (3).
